# EUROPEAN PATENT SPECIFICATION

(11) **EP 0 836 764 B1**
(45) Date of publication and mention of the grant of the patent: **03.11.1999**
(21) Application number: 96923949.0
(22) Date of filing: 27.06.1996
(51) Int. Cl.: H02P 7/74

(54) **METHOD AND UNIT FOR CONTROLLING THE SYNCHRONIZATION OF COMPLEX MACHINES IN CASE OF ELECTRIC POWER FAILURE**
VERFAHREN UND VORRICHTUNG ZUR REGELUNG DER SYNCHRONISATION VON KOMPLEXEN MASCHINEN IM FALL DES AUSFALLS DER ELEKTRISCHEN STROMVERSORGUNG
PROCEDE ET UNITE ASSURANT LE SYNCHRONISME DES MACHINES COMPLEXES EN CAS DE DEFAILLANCE D'ALIMENTATION ELECTRIQUE

(30) Priority: 05.07.1995 IT VI950112
(43) Date of publication of application: 22.04.1998
(73) Proprietor: Reel S.R.L., 36024 Ponte di Nanto (IT)
(72) Inventor: BERTOTTO, Ezio, I-36031 Dueville (IT)
(74) Representative: O'Byrne, Daniel Joseph
(86) International application number: EP9602802
(87) International publication number: WO9702650

(56) References cited:
- DE-A- 3 347 113
- DE-A- 4 306 307
- US-A- 5 196 769
- PATENT ABSTRACTS OF JAPAN vol. 13, no. 113 (E-729) 17 March 1989 & JP,A,63 283 498 (MEIDENSHA ELECTRIC MFG CO LTD) 21 November 1988
- PATENT ABSTRACTS OF JAPAN vol. 10, no. 197 (E-418) <2253> 10 July 1986 & JP,A,61 039 896 (TOSHIBA CORP) 26 February 1986

## Description

The present invention relates to a method and a unit for controlling the synchronization of complex machines, such as for example automated industrial facilities for mass-production in the mechanical, textile, chemical, papermaking, and food-production sectors, to mention only a few of the best-known, in case of electric power failure.

It is known that these machines are characterized by a large number of devices with corresponding electrical actuation systems that supervise the various functions and steps of the production process.

These devices must generally operate in a synchronous manner, that is to say, keeping precise speed or pitch ratios among each other in order to ensure continuity of the process and constant quality of the resulting products. For example, in spinning facilities all the drums and the spools of the winding frames must have very precise speed ratios to avoid accumulations or tears of the thread.

In the past, this condition could be met because the various devices were generally connected to the rigid mechanical shaft of a single prime mover by means of belts, chains, or other equivalent systems that are suitable to maintain constant and invariable transmission ratios which, in case of an interruption in the supply of motive power, caused all the devices to decelerate proportionally, avoiding the above mentioned problems.

In today's complex machines, due to flexibility and productivity requirements, each device is generally actuated by a single independent DC motor or (more frequently) three-phase AC motor, of the asynchronous or brushless type. Other subsystems, such as brakes, encoders, dynamic stabilizers, and any other item that is necessary for the control and automation of the process, can be connected to the motors. Each motor, with the corresponding mechanical reduction unit, is generally connected to a so-called converter, which has the purpose of varying the frequency of the supply current to adjust the speed or power that is delivered as a function of the external loads. The assembly constituted by the motor, the reduction unit, any accessories, and the converter constitutes a so-called drive. The various drives are in turn connected to the bus of a controller, of the analog type or, more modernly, of the digital type, which has the purpose of synchronizing the various converters, maintaining speed ratios that are constant or governed by preset rules.

It is known that the national or local power grid does not guarantee constant delivery of electric power and has temporary interruptions that can be caused by short circuits, sudden changes in absorption, starting of high loads, and line failures.

The interruptions can last a long time, for example more than three minutes, in which case it is necessary to resort to so-called uninterruptible power supplies.

Short interruptions, which fall within the field of application of the present invention, cause power failures lasting between a few tenths of a second and three minutes, with a higher incidence between 100 and 300 msec.

The sudden decelerations caused by these power failures can produce considerable damage, especially in some particularly sensitive products, such as for example threads. The various devices of an industrial machine in fact generally have very different flywheel masses and internal frictions; therefore, in case of power failures they are subject to different amounts of deceleration that alter the synchronization and the continuity of the process.

In order to obviate the lack of synchronization during deceleration, instead of the mechanical shaft of conventional systems having a single prime mover, one should create a so-called "virtual electrical shaft", that is to say, an intelligent connection between the adjustment systems of the various motors and drives that is suitable to maintain the speed ratios during the decelerations that occur as a consequence of the power failures in the electric grid.

A known method that is used by some manufacturers of control systems and converters consists in simultaneously braking the various components in a constant manner, with an approximately linear-type deceleration criterion, so as to use and convert the kinetic energy of the decelerating masses to supply the drives in a synchronous fashion.

A first drawback of this system is constituted by the fact that it does not use closed-loop adjustment and therefore actual synchronization control is not performed.

Secondly, if one wishes to ensure the operation of the system at all speeds, the deceleration curve must have a very steep slope. In the first part of the deceleration, that is to say, when the speeds are still rather high, the amount of kinetic energy that is removed from the system is greater than the amount that is strictly necessary to power the system; therefore, part of this energy must be dissipated irreversibly in order to maintain the energy balance. On the contrary, in the second part of the deceleration, that is to say, when the speeds are lower, there no longer is enough energy to operate the drives and the electronic components of the system and it is not possible to follow the linear deceleration criterion. Accordingly, to ensure the operation of the system even at low speeds, it is necessary to set a very steep deceleration curve slope, that is to say, to impose very sudden decelerations that can be extremely harmful to delicate products.

From DE-A-4306307 a process is known for preventing occurrence of damages in numerically controlled machines of the type having a plurality of motors driving different parts and devices. However, such prior method is not finalized to control the speed of the different motors so as to provide synchronization thereof and to maintain constant values of the speed ratios between the driven axes, as required for instance in complex spinning machines with a high numbers of rotating parts having very different flywheel masses in order to avoid breakage of threads and wires.

The aim of the present invention is to overcome the above mentioned limitations and to provide a method and an intelligent control unit for synchronizing the various devices and systems of a complex machine in which it is necessary to maintain preset speed ratios, such as to make the quality of the product being processed substantially insensitive to anomalies in current supply, particularly to power failures lasting longer than 0.1 seconds.

A particular object is to provide a method and a control unit that allow to obtain a deceleration curve of the machine that is as slow and uniform as possible even in the presence of power failures that lead to the full halting of the facility.

This aim is achieved by a method for controlling the deceleration of a facility according to claim 1, and by a control unit for performing the method according to claim 12.

The dependent claims describe particular embodiments of the method and control unit according to the invention.

By a method and a device according to the invention, one obtains a gradual deceleration of the various devices along an optimum curve that is calculated on the basis of the dynamic and electrical configuration of the facility, maintaining the longest possible voltage drop time. During deceleration, the various devices maintain the initial synchronization by using part of the kinetic energy of the most significant flywheel masses, which is instantly and automatically converted by the speed converters into electric power and redistributed proportionally among the various devices.

Further characteristics and advantages of the invention will become apparent from the following description of the method and control unit according to the invention, illustrated only by way of non-limitative example in the accompanying drawings, wherein:
Figure 1 is a block diagram of the connection between the various devices of an industrial facility, with specific reference to the most significant flywheel masses;
Figure 2 is a functional block diagram of the control unit according to the invention;
Figures 3 to 5 illustrate deceleration curves of the system in various control conditions;
Figures 6 and 7 plot families of deceleration curves of the various devices in case of prolonged power failure and in case of temporary grid loss, respectively.

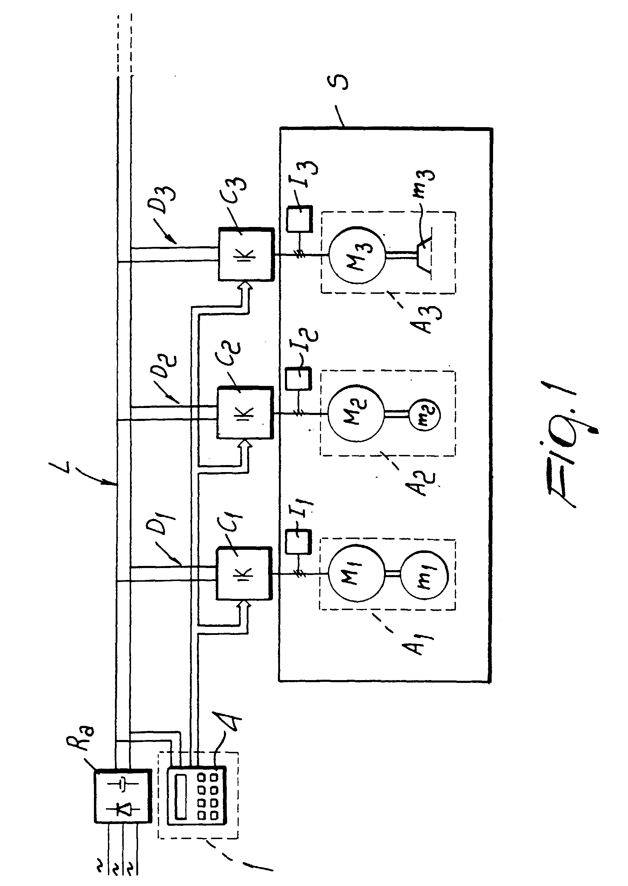

Figure 1 is a diagram of an electrical and functional connection between some of the devices of a machine or industrial facility S and the electric power grid.

In particular, the complex machine S, enclosed in the main block shown in solid lines, can contain a plurality of devices that perform specific functions of the production process. Only three of these devices have been shown inside the blocks A1, A2, and A3 in broken lines for the sake of simplicity. Of course, the number of devices is generally considerably higher, but this does not substantially change the nature of the problem.

Devices A1, A2, and A3 can be actuated by respective motors M1, M2, and M3, for example of the asynchronous type, and can include other accessories or devices, such as encoders, brakes, and speed and current sensors. The motors are connected to the bus of the power supply line L by leads D1, D2, and D3 and by frequency converters C1, C2, and C3 of a per se known type, for example of the kind produced and marketed by this same Applicant under the name AC WAVE2^{TM}. Each device has a flywheel mass m1, m2, m3 of known value, which a corresponding moment of inertia, and a speed V2, V2, and V3 that has a specific and constant ratio with respect to the speeds of the other devices during the normal operation of the machine.

The power line L is arranged after a rectifier unit Ra that is supplied with three-phase current provided by the national or local grid, which includes temporary power failures that have a known distribution.

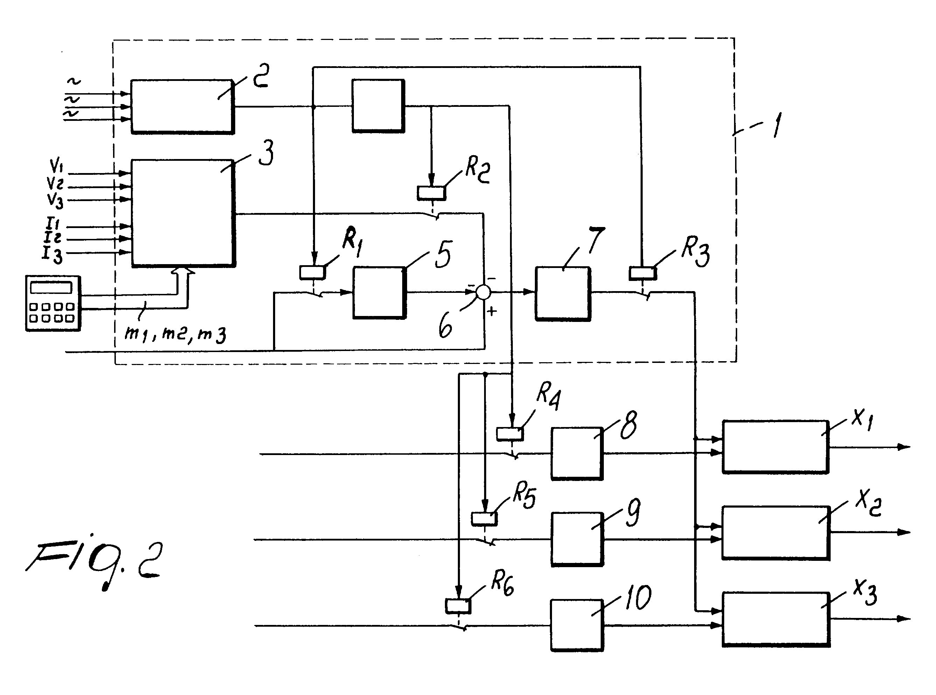

A control unit 1, preferably of the microprocessor type, is connected to the converters C1, C2, and C3 and is described in detail hereinafter with particular reference to Figure 2.

Unit 1 includes a noise detector, shown schematically as a block 2, that is connected to the three-phase electric grid ahead of the rectifier unit Ra and essentially has the purpose of measuring the duration of the voltage drops of each phase, indicating when it exceeds the minimum value of, for example, 10 msec, equal to three half wave periods. By virtue of this device it is possible to filter out measurement errors from actual power failures.

Furthermore, unit 1 includes a microprocessor computer 3 that is DC-supplied by the bus and receives input signals that arrive from speed detectors V1, V2, and V3 and from ammeters that measure the respective absorptions I1, I2, and I3 of the individual devices in order to take into account internal frictions and the loads that act on the respective devices. By an interface keyboard 4 it is possible to enter, the initial data, in the computer 3, for example the flywheel masses m1, m2, and m3 that are most significant with respect to those of the other devices of the system. As a first approximation, one might also introduce a single flywheel mass, particularly the one related to the device that has the greatest inertia.

The computer is programmed to process speeds V1, V2, and V3, currents I1, I2, and I3, and input data m1, m2, and m3 so as to calculate, at each instant, the initial slope of the optimum deceleration curve of the entire system at the moment To when the power failure occurs, in order to approximate a theoretical deceleration curve. It is noted that this theoretical optimum deceleration curve is approximately of the quadratic type, since the kinetic energy depends on the square of the speed.

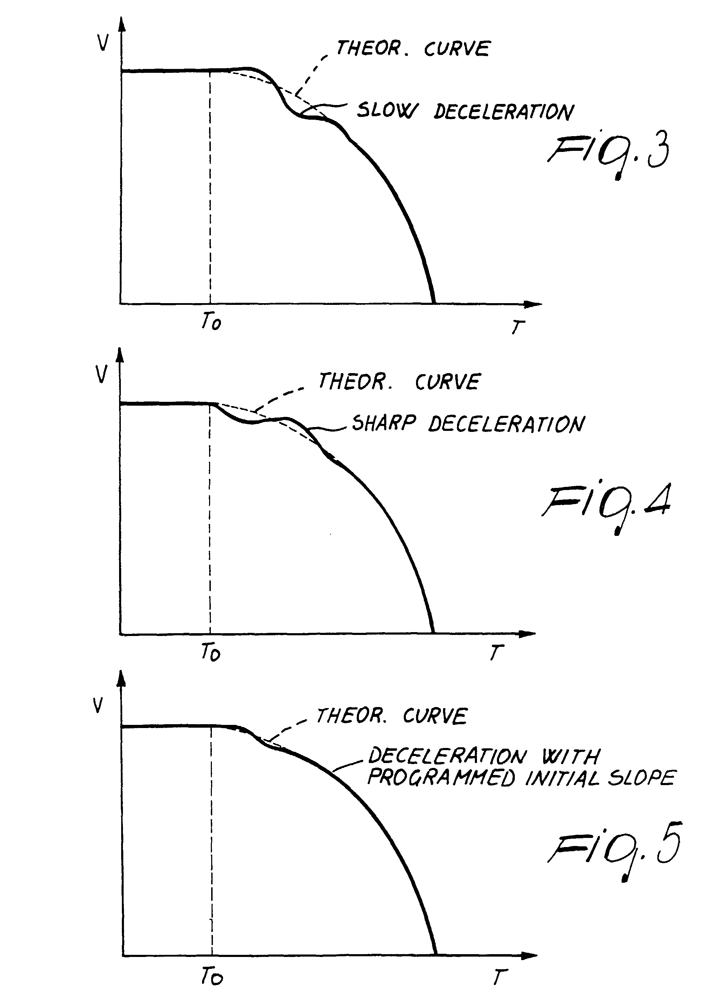

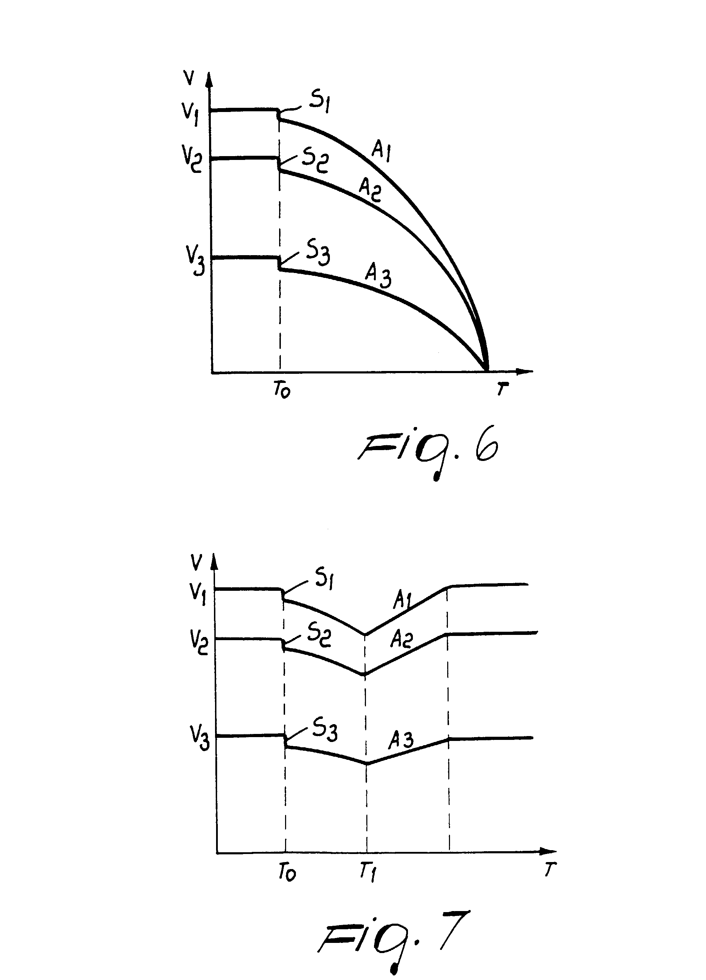

If this initial parameter were not calculated, one might adjust the system by assuming very slow braking, as shown in Figure 3, or very sharp braking, as shown in Figure 4, and in both cases considerable oscillations would occur before reaching an equilibrium condition that tends toward the theoretical curve, shown in dashed lines. Figure 5 instead shows the deceleration curve of the system when one introduces the initial slope in the calculation algorithm of the regulator, initial slope which is calculated by the computer 3, which provides a considerable approximation of the theoretical deceleration curve.

A sampling circuit 5 of the sample & hold type continuously calculates and stores a reference value of the voltage on the DC bus. A first relay R1 is provided on the supply line of circuit 5 and interrupts the stream of signals at the time To, holding it at the last sampled value.

A differential amplifier 6 compares the actual voltage of the DC bus with the last value sampled from circuit 5.

The error signal in output from amplifier 6 is sent to a closed-loop regulator 7 of the PID type, that is to say, of the type that has a proportional, integral, and derivative action, which determines a calculation algorithm for control. The signal in output from computer 3 is held by a third relay R3 at the time To and eliminates integral forcing on the PID regulator.

From the time To onward, the PID automatically regulates the deceleration so that the kinetic energy recovered by the combination of the flywheel masses is neither greater nor smaller than the energy that is sufficient to supply all the devices of the machine, maintaining the energy balance and keeping the voltage of the supply bus L constant.

Before starting the regulation, the PID calculates, a reference value, or "speed set point", for each device, so as to detect the average absorption with respect to this value. This leads to an initial speed step S1, S2, and S3, shown in Figures 6 and 7, whose size depends on the various absorptions and on the respective flywheel masses.

The output signal from the PID is constituted by a number between 1 and 0 and is proportional to the actual value of the speed during deceleration. This signal is held by a third relay R3 and sent outside unit 1.

The output signal from the PID can be used to regulate the various drives: for example, it can be sent to multipliers X1, X2, and X3 associated with each converter C1, C2, and C3. The values of the speed set points V1, V2, and V3 sampled last by three sample & hold circuits 8, 9, and 10 are held by respective relays R4, R5, and R6 and are multiplied by multipliers X1, X2, and X3 by the numeric signal computed by the PID regulator and held by relay R3.

Starting from time To, the most significant flywheel masses m1, m2, and m3 have a certain inertia that tends to keep them in motion. During deceleration, part of the kinetic energy of masses m1, m2, and m3 is transferred to motors M1, M2, and M3, which act as generators. The amount of kinetic energy converted by the motors into electric power is distributed within the system, which therefore requires no external source for the time during which the power failure occurs. During this interval, converters C1, C2, and C3 regulate the voltage and distribute it proportionally to all the motors of the individual devices of the machine, providing uniform deceleration. By virtue of the perfect setting of the converters, the speeds of the devices maintain their initial synchronization, that is to say, the initial ratios, avoiding damage to the delicate materials being processed.

In practice, the control method according to the invention includes the following steps:
a) calculating the moment of inertia of one or more flywheel masses that are more significant than the others;
b) detecting grid noise and recognizing its duration;
c) instantaneously measuring the speed of each individual device and the current absorbed thereby;
d) calculating the initial speed to cancel out the average absorption of the entire system;
e) calculating the initial slope of the optimum deceleration curve on the basis of the most significant flywheel masses and of the corresponding speeds and absorbed currents;
f) sampling and holding of the mains voltage;
and the following steps from the moment of actual power failure:
g) setting the value of the initial slope of the deceleration curve and introducing this value in a calculation algorithm;
h) sending the value of the initial speed calculated to cancel out average absorption;
i) comparing the actual value of the voltage in the supply line with the last sampled value, in order to obtain a first error signal;
j) sending the first error signal to a closed-loop regulator circuit that operates with the calculation algorithm to obtain a second system control signal;
k) sending the second control signal to the speed converter of each individual device to gradually reduce its speed, maintaining synchronization with the devices of the machine.

By this method, in case of prolonged power failure, devices A1, A2, and A3 decelerate until their speed is eliminated, as shown in the chart of Figure 6, whereas in case of a short-lasting grid loss, the speed of the devices decreases up to a certain moment T1, when the power supply returns. The speed of the devices increases again, following a linear rule, as in the case of cold-starting.

In order to control all possible situations in an optimum manner, it is possible to introduce some setting parameters, such as for example: the parameters of the PID regulator, which affect the stability and performance of the control loop. The time required by the machine to stop, merely by inertia, which is relevant in calculating the initial deceleration slope; and the value of the maximum deceleration slope that prevents the regulator from imposing speed variations that are harmful to the mechanics of the machine.

In the illustrated embodiment the logic system of unit 1 is of the digital type. For the sake of practicality, communications between the unit and the converters can occur by an RS485 serial port, but it can also be different without modifying the inventive concept.

Furthermore, although the logic system and the communications protocol of the above described unit 1 are of the digital-logic type, it is evident that they can be analog or fuzzy without entailing modifications to the inventive concept.

Some limitations to the use of this method and control unit can be constituted by machines whose drives have negligible inertial masses. In order to obviate this drawback, it is possible to introduce, an inertial load, that has a sufficient flywheel mass, on the shaft of one or more drives or it is possible to increase the steady-state speed of the motors.

From the above description it is evident that the method and the control unit according to the invention achieve the intended aim and all the objects, and in particular their ability to decelerate the various devices of the machine synchronously and with a uniform deceleration curve is stressed.

The method and the control unit according to the invention are susceptible of numerous modifications and variations, all of which are within the scope of the inventive concept expressed in the accompanying claims and are all equally protected.

## Claims

1. Method for controlling the synchronization of a complex machine during power grid failures or losses, wherein said machine has a plurality of drives (A1, A2, A3) whose respective electric motors (M1, M2, M3) are powered by converters (C1, C2, C3) arranged for connection to an electric power line (L), and wherein each drive has a flywheel mass (m1, m2, m3) of known value and a speed (V1, V2, V3) that is synchronized with that of the other devices to ensure regular operation of the machine in steady-state conditions, said method comprising the following step prior to an actual power failure:
a) detecting grid noise and recognizing its duration;
b) calculating the initial speed (V1, V2, V3) to cancel out the average absorption of the entire machine;
c) sampling and holding of the mains voltage;
and the following steps from the moment of the actual power failure:
d) calculating the value of the initial speed calculated to cancel out average absorption;
e) comparing the actual value of the voltage in the supply line with the last sampled value in order to obtain a first error signal;
**characterized** by the following steps prior to an actual power failure:
- calculating the moment of inertia of one or more flywheel masses (m1, m2, m3) that are more significant than the others;
- calculating the initial slope of the optimum deceleration curve on the basis of said most significant flywheel masses (m1, m2, m3) and of the corresponding speeds (V1, V2, V3) and absorbed currents (I1, I2, I3);
and by the following steps from the moment of actual power failure:
- setting the value of the initial slope of said deceleration curve and introducing said value in a calculation algorithm;
- sending said first error signal to a closed-loop regulator circuit (7) that operates with said calculation algorithm to obtain a second error signal;
- sending said second error signal to the speed converters (C1, C2, C3) of each single device (A1, A2, A3) to gradually reduce its speed maintaining the synchronization thereof with the remaining devices of the machine;
whereby during deceleration of the machine the kynetic energy of the devices (A1, A2, A3) that have the most significant flywheel masses is partially converted into electric power by said converters in an amount that is sufficient to power both said converters and the electronic circuits for calculation, regulation and control of the machine.

2. Method according to claim 1, characterized in that said closed-loop regulator circuit is a PID circuit.

3. Method according to claim 1, characterized in that said closed-loop regulator circuit is an analog circuit with conventional components.

4. Method according to claim 1, characterized in that said closed-loop regulator circuit is a fuzzy circuit.

5. Method according to claim 2, characterized in that the output error signal from said PID circuit is a numeric value between 1 and 0 that corresponds to the instantaneous valued of the speed determined by said deceleration curve.

6. Method according to claim 5, characterized in that the speed of each motor is measured and sampled continuously by a circuit of the sample and hold type, the last sampled value being multiplied by said numeric value by a multiplier operator that is associated with each converter.

7. Method according to claim 1, characterized in that the part of kinetic energy that is converted into electric power by the converters during deceleration is sufficient to maintain the supply voltage at a value that is at least equal to 10% of the nominal value.

8. Method according to claim 1, characterized in that the device power supply line is of the DC type.

9. Method according to claim 1, characterized in that the control and regulation circuits are of the digital microprocessor type.

10. Method according to claim 1, characterized in that the control and regulation circuits are analog.

11. Method accordin to claim 1, characterized in that the final speed of the devices at the end of develeration can be greater than, or equal to, zero depending on the actual duration of the power failure.

12. Unit for controlling the synchronization of a complex machine during electric power failures or losses, for actuation of the method in accordance with one or more of the preceding claims, wherein said machine comprises a plurality of motorized devices (A1, A2, A3) for the movement and control of the various components, and wherein each device is connected to the power supply bus by a speed converter (C1, C2, C3), each device having a flywheel mass (m1, m2, m3) of known value and having, in the steady state, a speed (V1, V2, V3) that is synchronized with that of the other devices to allow the regular operation of the machine, wherein said control unit comprises:
- a system (2) for recognizing an actual grid power failure;
- means for measuring the speed (V1, V2, V3) and current (I1, I2, I3) of the various devices:
- a circuit (5) for comparing the voltage of the power supply bus with the last value of the voltage detected before the grid power failure, suitable to generate a first error signal;
- a closed-loop regulator circuit (7) for processing said first error signal, so as to generate a second error signal;
characterized in that it further comprises:
- a processing means (3) for calculating the moments of inertia of the most significant flywheel masses (m1, m2, m3) and the initial slope of the deceleration as a function of the moments of inertia of said most significant flywheel masses (m1, m2, m3), of the respective speeds (V1, V2, V3), and of the absorbed currents (I1, I2, I3) ; and
- a multiplying operator (X1, X2, and X3) associated to each converter (C1, C2, C3) to control the gradual and synchronous deceleration of all the devices (A1, A2, A3), converting part of the kinetic energy of said most significant flywheel masses (m1, m2, m3) into electric power for the supply of the control system and of said devices.

13. Control unit according to claim 12, characterized in that. it is of the digital microprocessor type, with said closed-loop regulator (7) of the PID type.

14. Control unit according to claim 12, characterized in that it has a sample & hold circuit for sampling both the grid voltage and the speed of each device, said circuits being activated by a signal that is generated by said system for recognizing an actual power failure at the moment in which an actual grid power failure occurs.

15. Control unit according to claim 14, characterized in that said system (2) for detecting a power failure is set to recognize noise lasting more than 10 msec.

## Patentansprüche

1. Verfahren zur Gleichlaufsteuerung einer komplexen Maschine bei Fehlern oder Ausfällen im Stromversorgungsnetz, wobei die Maschine eine Mehrzahl von Antrieben (A1, A2, A3) hat, deren jeweilige Elektromotoren (M1, M2, M3) durch Konverter (C1, C2, C3) versorgt werden, welche an eine Stromversorgungsleitung (L) angeschlossen sind, und wobei jeder Antrieb eine Schwungmasse (m1, m2, m3) bekannter Größe und Geschwindigkeit (V1, V2, V3) hat, welche mit derjenigen der anderen Vorrichtungen synchronisiert ist, um dadurch die Regelmäßigkeit des Betriebs der Maschine im Dauerzustand zu gewährleisten, wobei dieses Verfahren die folgenden Schritte vor einem Netzausfall umfaßt:
a) Erkennen eines Netzrauschens und Erfassen der Dauer dieses Rauschens;
b) Berechnen der Anfangsgeschvindigkeit (V1, V2, V3), um die mittlere Adsorption der gesamten Maschine aufzuheben;
c) Abtasten und Speichern der Netzspannung;
wobei die folgenden Schritte unmittelbar nach dem Netzausfall durchgeführt werden:
d) Berechnen der Größe der Anfangsgeschwindigkeit, die zum Aufheben der mittleren Adsorption errechnen wurde;
e) Vergleich der aktuellen Größe der Spannung in der Versorgungsleitung mit dem zuletzt abgetasteten Wert, um ein erstes Störsignal zu erhalten;
gekennzeichnet durch die folgenden Schritte vor einem aktuellen Netzausfall:
- Berechnen des Trägheitsmomentes einer oder mehrerer Schwungmassen (m1, m2, m3), welches signifikanter als die anderen ist;
- Berechnen der Anfangssteigung der optimalen Verzögerungskurve auf der Basis der signifikantesten Schwungmasse (m1, m2, m3), der entsprechenden Gewindigkeiten (V1, V2, V3) und der aufgenommenen Ströme (I1, I2, I3);
und durch die folgenden Schritte unmittelbar nach dem aktuellen Netzausfall:
- Festlegen des Wertes der Anfangssteigung der Verzögerungskurve und Einführen dieses Wertes in einen Berechnungsalgorithmus;
- Weitergabe des ersten Störsignals in einen geschlossenen Regelkreis (7), der über den Berechnungsalgorithmus ein zweites Fehlersignal ermittelt;
- Weitergabe des zweiten Fehlersignals an die Geschwindigkeitskonverter (C1, C2, C3) jeder einzelnen Vorrichtung (A1, A2, A3), um deren Geschwindigkeit schrittweise zu verringern, wobei der Gleichlauf mit den anderen Vorrichtungen der Maschine beibehalten bleibt;
wobei während der Verzögerung der Maschine die kinetische Energie der Vorrichtungen (A1, A2, A3), welche die signifikantesten Schwungmassen haben, durch die Konverter teilweise in elektrische Energie umgewandelt wird, und zwar in einer Größenordnung, die ausreicht, um beide Konverter und die elektronischen Schaltungen für Berechnung, Regelung und Steuerung der Maschine zu versorgen.

2. Verfahren nach Anspruch 1, dadurch gekennzeichnet, daß der geschlossene Regelkreis eine PID-Schaltung ist.

3. Verfahren nach Anspruch 1, dadurch gekennzeichnet, daß der geschlossene Regelkreis eine Analogschaltung mit konventionellen Bauelementen ist.

4. Verfahren nach Anspruch 1, dadurch gekennzeichnet, daß der geschlossene Regelkreis aus einer Fuzzy-Schaltung besteht.

5. Verfahren nach Anspruch 2, dadurch gekennzeichnet, daß das Ausgangsfehlersignal der PID-Schaltung eine numerische Größe zwischen 1 und 0 hat, welche den entsprechenden Augenblickswerten der Geschwindigkeit entspricht, die durch die Verzögerungskurve definiert sind.

6. Verfahren nach Anspruch 5, dadurch gekennzeichnet, daß die Geschwindigkeit jedes Motors kontinuierlich durch einen Abtast-und Haltekreis gemessen und erfaßt wird, wobei der zuletzt erfaßte Wert mit dem numerischen Wert multipliziert wird durch einen Multiplizieroperator, der jedem Konverter zugeordnet ist.

7. Verfahren nach Anspruch 1, dadurch gekennzeichnet, daß der Teil der kinetischen Energie, der durch die Konverter während der Verzögerung in elektrische Energie umgewandelt wird, ausreicht, um die Versorgungsspannung auf einem Wert zu halten, der wenigstens 10% des Nennwertes entspricht.

8. Verfahren nach Anspruch 1, dadurch gekennzeichnet, daß die Versorgungsleitung für die Vorrichtungen eine Gleichstromleitung ist.

9. Verfahren nach Anspruch 1, dadurch gekennzeichnet, daß die Steuer- und Regelschaltungen digitale Mikroprozessoren enthalten.

10. Verfahren nach Anspruch 1, dadurch gekennzeichnet, daß die Steuer- und Regelschaltungen analoger Bauart sind.

11. Verfahren nach Anspruch 1, dadurch gekennzeichnet, daß die Endgeschwindigkeit der Vorrichtungen am Ende der Verzögerung in Abhängigkeit von der effektiven Dauer des Netzausfalls größer als oder gleich Null sein kann.

12. Vorrichtung zur Gleichlaufsteuerung einer komplexen Maschine bei Fehlern oder Ausfällen der elektrischen Versorgung für die Durchführung des Verfahrens nach einem der vorhergehenden Ansprüche, wobei diese Maschine eine Mehrzahl angetriebener Vorrichtungen (A1, A2, A3) für die Bewegung und Steuerung der einzelnen Komponenten aufweist und jede Vorrichtung über einen Geschwindigkeitskonverter (C1, C2, C3) mit einem Stromversorgungsbus verbunden ist, eine Schwungmasse (m1, m2, m3) bekannter Größe aufweist und im Dauerzustand eine Geschwindigkeit (V1, V2, V3) hat, welche mit derjenigen der anderen Vorrichtungen synchronisiert wird, um die Regelmäßigkeit des Betriebs der Maschine sicherzustellen, wobei die Steuervorrichtung umfaßt:
- ein System (2) zum Erkennen eines aktuellen Netzstromausfalls;
- Mittel zum Messen der Geschwindigkeit (V1, V2, V3) und des Stromes (I1, I2, I3) der einzelnen Vorrichtungen;
- eine Schaltung (5) für den Vergleich der Spannung im Stromversorgungsbus mit dem letzten Wert der Spannung, der vor dem Netzstromausfall ermittelt wurde und der geeignet ist, ein erstes Fehlersignal zu erzeugen;
- einen geschlossenen Regelkreis (7) zur Erzeugung des ersten Fehlersignals, um ein zweites Fehlersignal zu generieren;
dadurch gekennzeichnet, daß die Vorrichtung ferner umfaßt
- einen Prozessor (3) zum Errechnen der Trägheitsmomente der signifikantesten Schwungsmassen (m1, m2, m3) und der Anfangssteigung der Verzögerung in Funktion der Trägheitsmomente der signifikantesten Schwungmassen (m1, m2, m3), der entsprechenden Geschwindigkeiten (V1, V2, V3) und der aufgenommenen Ströme (I1, I2, I3) ; sowie
- einen Multiplizieroperator (X1, X2, X3), der jedem Konverter (C1, C2, C3) zugeordnet ist, um die schrittweise und synchrone Verzögerung aller Vorrichtungen (A1, A2, A3) zu steuern, wobei ein Teil der kinetischen Energie der signifikantesten Schwungmassen (m1, m2, m3) in elektrische Energie für die Versorgung des Steuersystems der Vorrichtungen umgewandelt wird.

13. Vorrichtung nach Anspruch 12, dadurch gekennzeichnet, daß diese einen digitalen Mikroprozessor mit einem geschlossenen PID-Regelkreis (7) aufweist.

14. Vorrichtung nach Anspruch 12, dadurch gekennzeichnet, daß diese einen Abtast- und Haltekreis zum Erfassen sowohl der Netzspannung als auch der Geschwindigkeit jeder Vorrichtung aufweist, wobei die Schaltungen durch ein Signal aktiviert werden, welches durch das System zum Erkennen des aktuellen Stromausfalls in dem Augenblick erzeugt wird, in dem die Netzstromversorgung ausfällt.

15. Vorrichtung nach Anspruch 14, dadurch gekennzeichnet, daß das System (2) zum Erfassen eines Stromausfalls so eingestellt ist, daß ein Rauschen erfaßt wird, das länger als 10 msec anhält.

## Revendications

1. Procédé pour commander la synchronisation d'une machine complexe pendant des défaillances ou pertes du réseau d'alimentation, dans lequel ladite machine possède une pluralité d'entraînements (A1, A2, A3) dont les moteurs électriques respectifs (M1, M2, M3) sont alimentés par des convertisseurs (C1, C2, C3) agencés pour être connectés à une ligne d'alimentation électrique (L), et dans lequel chaque entraînement possède une masse de volant d'inertie (m1, m2, m3) d'une valeur connue et une vitesse (V1, V2, V3) qui est synchronisée avec celle des autres dispositifs pour assurer un fonctionnement régulier de la machine dans des conditions de régime permanent, ledit procédé comprenant la phase suivante avant une défaillance effective de l'alimentation :
a) détecter le bruit du réseau et repérer sa durée ;
b) calculer la vitesse initiale (V1, V2, V3) pour effacer l'absorption moyenne de l'ensemble de la machine ;
c) échantillonner et conserver la tension du réseau ;
et les phases suivantes à partir du moment de la défaillance effective de l'alimentation :
d) calculer la valeur de la vitesse initiale calculée pour effacer l'absorption moyenne ;
e) comparer la valeur réelle de la tension régnant dans la ligne d'alimentation à la demière valeur échantillonnée afin d'obtenir un premier signal d'erreur
caractérisé par les phases suivantes qui précèdent une défaillance effective de l'alimentation :
- calculer le moment d'inertie d'une ou de plusieurs masses de volant d'inertie (m1, m2, m3) qui sont plus significatives que les autres ;
- calculer la pente initiale de la courbe optimale de décélération sur la base desdites masses de volant d'inertie (m1, m2, m3) les plus significatives et des vitesses (V1, V2, V3) et courants absorbés (I1, I2, I3) correspondants ;
et par les phases suivantes à partir du moment de la défaillance effective de l'alimentation :
- fixer la valeur de la pente initiale de ladite courbe de décélération et introduire ladite valeur dans un algorithme de calcul ;
- transmettre ledit premier signal d'erreur à un circuit régulateur en boucle fermée (7) qui opère avec ledit algorithme de calcul pour obtenir un deuxième signal d'erreur ;
- transmettre ledit deuxième signal d'erreur aux convertisseurs de vitesse (C1, C2, C3) de chaque dispositif (A1, A2, A3) pour réduire progressivement sa vitesse tout en maintenant sa synchronisation avec les autres dispositifs de la machine ;
de sorte que, pendant la décélération de la machine, l'énergie cinétique des dispositifs (A1, A2, A3) qui ont les masses de volant d'inertie les plus significatives est partiellement convertie en énergie électrique par lesdits convertisseurs, dans une mesure qui est suffisante pour alimenter à la fois lesdits convertisseurs et les circuits électroniques utilisés pour le calcul, la régulation et la commande de la machine.

2. Procédé selon la revendication 1, caractérisé en ce que ledit circuit régulateur en boude fermée est un circuit PID.

3. Procédé selon la revendication 1, caractérisé en ce que ledit circuit régulateur en boucle fermée est un circuit analogique équipé de composants classiques.

4. Procédé selon la revendication 1, caractérisé en ce que ledit circuit régulateur en boucle fermée est un circuit flou.

5. Procédé selon la revendication 2, caractérisé en ce que le signal d'erreur de sortie issu dudit circuit PID est une valeur numérique comprise entre 1 et 0 qui correspond à la valeur instantanée de la vitesse déterminée par ladite courbe de décélération.

6. Procédé selon la revendication 5, caractérisé en ce que la vitesse de chaque moteur est mesurée et échantillonnée par un circuit du type échantillonnage et maintien, la dernière valeur échantillonnée étant multipliée par ladite valeur numérique au moyen d'un opérateur multiplicateur qui est associé à chaque convertisseur.

7. Procédé selon la revendication 1, caractérisé en ce que la partie de l'énergie cinétique qui est convertie en puissance électrique par les convertisseurs pendant la décélération est suffisante pour maintenir la tension d'alimentation à une valeur qui est au moins égale à 10% de la valeur nominale.

8. Procédé selon la revendication 1, caractérisé en ce que la ligne d'alimentation du dispositif est du type à courant continu.

9. Procédé selon la revendication 1, caractérisé en ce que les circuits de commande et de régulation sont du type numérique à microprocesseur.

10. Procédé selon la revendication 1, caractérisé en ce que les circuits de commande et de régulation sont analogiques.

11. Procédé selon la revendication 1, caractérisé en ce que la vitesse finale des dispositifs à la fin de la décélération peut être supérieure ou égale à zéro, selon la durée réelle de la défaillance de l'alimentation.

12. Unité pour commander la synchronisation d'une machine complexe pendant des défaillances ou pertes de l'alimentation électrique, pour la mise en oeuvre du procédé selon une ou plusieurs des revendications précédentes, dans laquelle ladite machine comprend une pluralité de dispositifs motorisés (A1, A2, A3) pour la mise en mouvement et la commande des différents composants et dans laquelle chaque dispositif est connecté à un bus d'alimentation par un convertisseur de vitesse (C1, C2, C3), chaque dispositif ayant une masse de volant d'inertie (m1, m2, m3) de valeur connue et ayant, en régime permanent, une vitesse (V1, V2, V3) qui est synchronisée avec celle des autres dispositifs pour permettre le fonctionnement régulier de la machine, où ladite unité de commande comprend :
- un système (12) pour détecter une défaillance effective de la puissance du réseau;
- des moyens pour mesurer la vitesse (V1, V2, V3) et le courant (I1, I2, I3) des différents dispositifs ;
- un circuit (5) pour comparer la tension du bus d'alimentation à la dernière valeur de la tension détectée avant la défaillance de l'alimentation par le réseau, appropriée pour engendrer un premier signal d'erreur ;
- un circuit régulateur en boucle fermée (7), pour traiter ledit premier signal d'erreur de façon à engendrer un deuxième signal d'erreur ;
caractérisé en ce qu'elle comprend en outre :
- un moyen de traitement (3) pour calculer les moments d'inertie des masses de volant d'inertie (m1, m2, m3) les plus significatives, et la pente initiale de la décélération en fonction des moments d'inertie desdites masses de volant d'inertie les plus significatives (m1, m2, m3), des vitesses respectives (V1, V2, V3) et des courants absorbés (I1, I2, I3) ; et
- un opérateur de multiplication (X1, X2 et X3) associé à chaque convertisseur (C1, C2, C3) pour commander la décélération progressive et synchrone de tous les dispositifs (A1, A2, A3), en convertissant une partie de l'énergie cinétique de chacune des masses de volant d'inertie (m1, m2, m3) les plus significatives en une puissance électrique pour l'alimentation du système de commande et desdits dispositifs.

13. Unité de commande selon la revendication 12, caractérisé en ce qu'elle est du type numérique à microprocesseur, ledit régulateur en boucle fermée (7) étant du type PID.

14. Unité de commande selon la revendication 12, caractérisée en ce qu'elle comprend un circuit d'échantillonnage et de maintien pour échantillonner à la fois la tension du réseau et la vitesse de chaque dispositif, lesdits circuits étant activés par un signal qui est généré par ledit système pour reconnaître une défaillance effective de l'alimentation au moment où se produit une défaillance effective de l'alimentation par le réseau.

15. Unité de commande selon la revendication 14, caractérisé en ce que ledit système (2) pour détecter une défaillance de la puissance est réglé pour repérer un bruit qui dure plus de 10 ms.
